# EUROPEAN PATENT APPLICATION

(11) **EP 2 883 523 A1**
(43) Date of publication of application: **17.06.2015**
(21) Application number: 13196381.1
(22) Date of filing: 10.12.2013
(51) Int. Cl.: A61G 5/04, A61G 5/10, A61G 5/12, B62D 21/14, B62K 15/00

(54) **Modular mobile vehicle with an adjustable wheelbase**

(71) Applicant: Hota Industrial MFG Co., Ltd., Taichung City (TW)
(72) Inventor: Chang, Min-Hsiung, Taichung City (TW); Chen, Jui-An, Taichung City (TW); Lan, Chao-Wen, Taichung City (TW)
(74) Representative: Viering, Jentschura & Partner Patent- und Rechtsanwälte

(57) **Abstract**

A modular mobile vehicle with an adjustable wheelbase has a ready-made vehicle body (10), at least one wheelbase actuator (20) and a seat module (30) mounted on the ready-made vehicle body (10). The ready-made vehicle body (10) has at least one motor (18), at least one rear wheel (12), two horizontally mounted guiding tubes (14), a front wheel frame (15) slidably mounted around the two guiding tubes (14), and at least one front wheel (16). The at least one wheelbase actuator (20) is mounted on the ready-made vehicle body (10), is located between the two guiding tubes (14), and is extendably connected with the front wheel frame (15). The seat module (30) is mounted on the ready-made vehicle body (10) and has a seat body (33) detachably mounted on the ready-made vehicle body (10).

## Description

### 1. Field of the Utility Model

The present invention relates to a modular mobile vehicle, and more particularly to a modular mobile vehicle with an adjustable wheelbase.

### 2. Description of Related Art

A user who has a reduced mobility needs assistance of a mobile vehicle to take care of himself. A conventional mobile vehicle, such as a wheelchair or a scooter, has an adjustable wheelbase to selectively adjust a wheelbase of the mobile vehicle to apply in an indoor environment and an outdoor environment. When the mobile vehicle is applied in the indoor environment, the mobile vehicle is adjusted to a shorter wheelbase mode since the moving distance is shorter and the ground in the indoor environment is relatively flat. When the mobile vehicle is applied in the outdoor environment, the mobile vehicle is adjusted to a larger wheelbase mode since the moving distance is longer and the ground in the outdoor environment is relatively rugged.

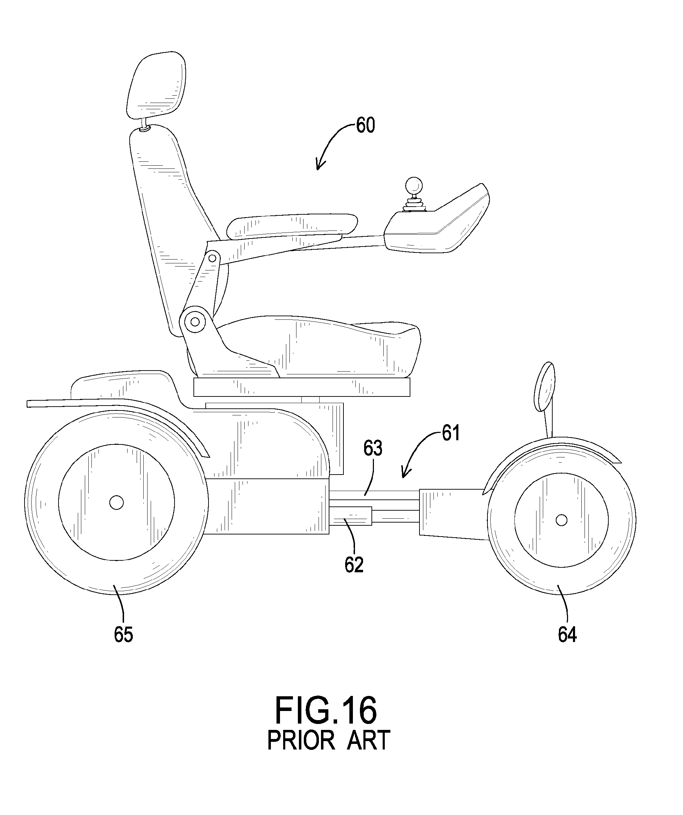

Taking a wheelchair for example, with reference to Fig. 16, the conventional wheelchair 60 has a wheelbase adjusting unit 61. The wheelbase adjusting unit 61 is mounted in a bottom of the wheelchair 60 and has a wheelbase actuator 62 and a guiding tube 63. The wheelbase actuator 62 is extendably connected between two front wheels 64 and two rear wheels 65 of the wheelchair 60. The guiding tube 63 is located at an upside of the wheelbase actuator 62 and is connected between the front wheels 64 and the rear wheels 65. In use, when the wheelbase actuator 62 extends forward, the front wheels 64 can move forward along an axial direction of the guiding tube 63, such that the wheelbase between the front wheels 64 and the rear wheels 65 can be extended.

However, the guiding tube 63 is located at the upside of the wheelbase actuator 62, such that a horizontal supporting strength provided by the wheelbase actuator 62 and the guiding tube 63 for the front wheels 64 may be insufficient. When the mobile vehicle proceeds on a rugged ground, the mobile vehicle may shake due to the poor road conditions.

The main objective of the present invention is to provide a modular mobile vehicle with an adjustable wheelbase to resolve the mentioned problem.

The modular mobile vehicle with an adjustable wheelbase has a ready-made vehicle body, at least one wheelbase actuator and a seat module.

The ready-made vehicle body has a frame module. The frame module has at least one motor. The ready-made vehicle body further has at least one rear wheel rotatably mounted on the frame module, two guiding tubes horizontally mounted on the frame module, a front wheel frame slidably mounted around the two guiding tubes, and at least one front wheel rotabably mounted on the front wheel frame.

The least one wheelbase actuator is mounted on the ready-made vehicle body, is located between the two guiding tubes, and is extendably connected with the front wheel frame.

The seat module is mounted on the ready-made vehicle body and has a seat body detachably mounted on the ready-made vehicle body.

Other objectives, advantages and novel features of the present invention will become more apparent from the following detailed description when taken in conjunction with the accompanying drawings.

### IN THE DRAWINGS

Fig. 1 is a perspective view of a first preferred embodiment of a modular mobile vehicle with an adjustable wheelbase in accordance with the present invention;
Fig. 2 is an exploded perspective view of the modular mobile vehicle with an adjustable wheelbase in Fig. 1;
Fig. 3 is a perspective view of a ready-made vehicle body and a wheelbase actuator of the modular mobile vehicle with an adjustable wheelbase in Fig. 1;
Fig. 4 is a perspective view of a seat module of the modular mobile vehicle with an adjustable wheelbase in Fig. 1;
Fig. 5 is a perspective view of a second preferred embodiment of a modular mobile vehicle with an adjustable wheelbase in accordance with the present invention;
Fig. 6 is an exploded perspective view of the modular mobile vehicle with an adjustable wheelbase in Fig. 5;
Fig. 7 is a perspective view of a ready-made vehicle body and a wheelbase actuator of the modular mobile vehicle with an adjustable wheelbase in Fig. 6;
Fig. 7A is an operational perspective view of the modular mobile vehicle with an adjustable wheelbase in Fig. 7;
Fig. 8 is a perspective view of a third preferred embodiment of a modular mobile vehicle with an adjustable wheelbase in accordance with the present invention;
Fig. 9 is a perspective view of a ready-made vehicle body and a wheelbase actuator of the modular mobile vehicle with an adjustable wheelbase in Fig. 8;
Fig. 9A is an operational perspective view of the modular mobile vehicle with an adjustable wheelbase in Fig. 9;
Fig. 10 is a perspective view of a fourth preferred embodiment of a modular mobile vehicle with an adjustable wheelbase in accordance with the present invention;
Fig. 11 is a perspective view of a ready-made vehicle body and a wheelbase actuator of the modular mobile vehicle with an adjustable wheelbase in Fig. 10;
Fig. 11A is an operational perspective view of the modular mobile vehicle with an adjustable wheelbase in Fig. 11;
Fig. 12 is a perspective view of a fifth preferred embodiment of a modular mobile vehicle with an adjustable wheelbase in accordance with the present invention;
Fig. 13 is a perspective view of a ready-made vehicle body and a wheelbase actuator of the modular mobile vehicle with an adjustable wheelbase in Fig. 12;
Fig. 13A is an operational perspective view of the modular mobile vehicle with an adjustable wheelbase in Fig. 13;
Fig. 14 is a perspective view of a sixth preferred embodiment of a modular mobile vehicle with an adjustable wheelbase in accordance with the present invention;
Fig. 15 is a perspective view of a ready-made vehicle body and a wheelbase actuator of the modular mobile vehicle with an adjustable wheelbase in Fig. 14;
Fig. 15A is an operational perspective view of the modular mobile vehicle with an adjustable wheelbase in Fig. 15; and
Fig. 16 is a side view of a conventional mobile vehicle with an adjustable wheelbase.

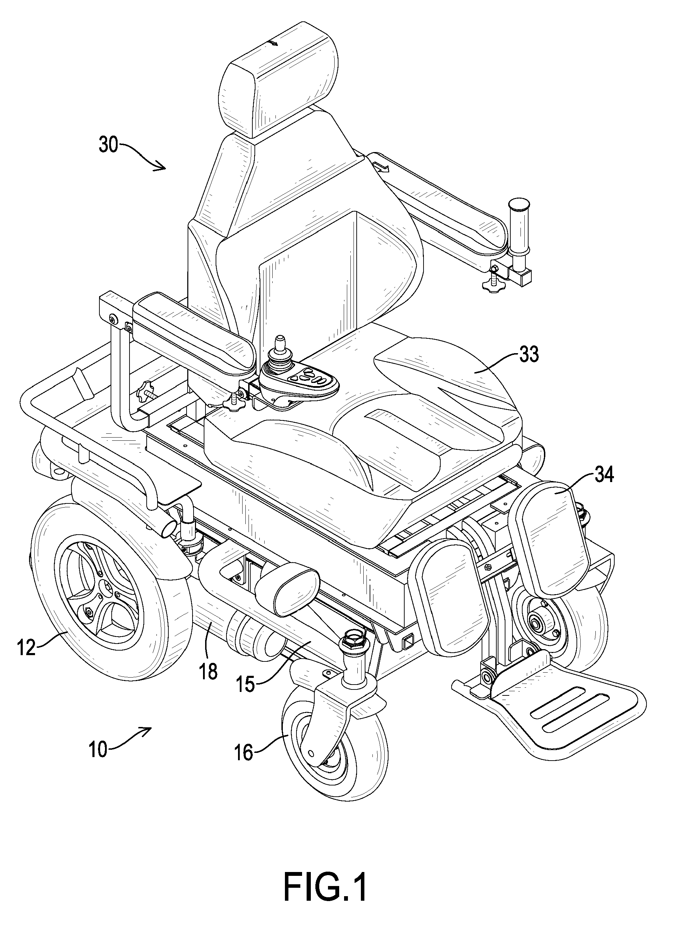

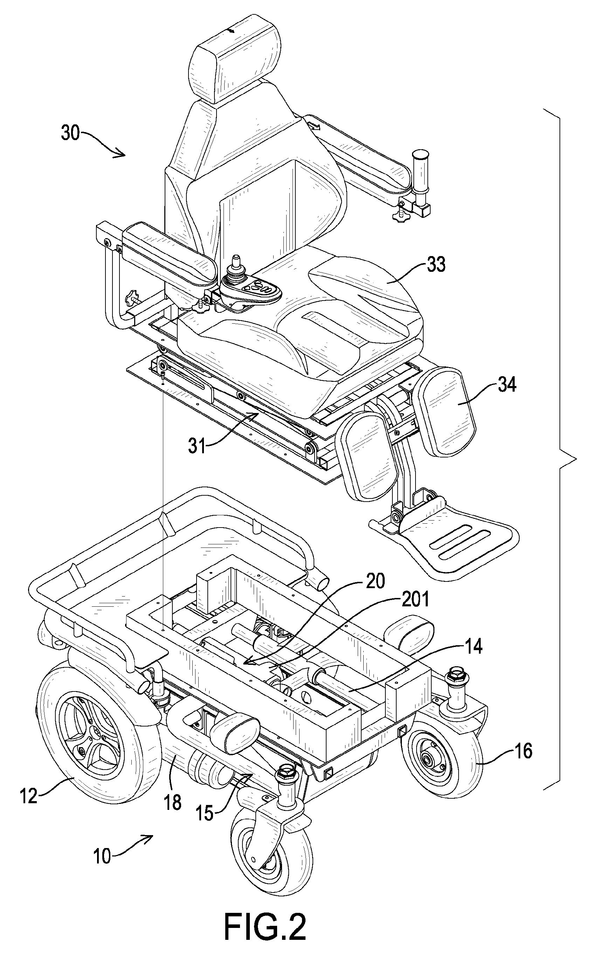

With reference to Figs.1 to 4, a first preferred embodiment of a modular mobile vehicle with an adjustable wheelbase in accordance with the present invention is a four-wheel wheelchair and has a ready-made vehicle body 10, a wheelbase actuator 20 and a seat module 30.

The ready-made vehicle body 10 has a frame module 11, two rear wheels 12, two fixed plates 13, two guiding tubes 14, a front wheel frame 15 and two front wheels 16.

The frame module 11 has a battery and two motors 18. The motors 18 are electrically connected with the battery. The rear wheels 12 are rotatably mounted on two sides of the frame module 11 and are respectively linked with the motors 18. The fixed plates 13 are mounted on an upside of the frame module 11 and are respectively located at a front portion and a rear portion of the ready-made vehicle body 10. The guiding tubes 14 are horizontally mounted on the upside of the frame module 11 and are connected between the fixed plates 13. The front wheel frame 15 is slidably mounted around the guiding tubes 14 and has two tube sleeves 151 and two connecting portions 152. The tube sleeves 151 are connected with each other and are respectively mounted around the guiding tubes 14. The connecting portions 152 are respectively connected with the tube sleeves 151. The front wheels 16 are rotatably and respectively mounted on the connecting portions 152.

The wheelbase actuator 20 is mounted on one of the fixed plates 13 and is located between the guiding tubes 14. An end of the wheelbase actuator 20 is connected with a middle of the front wheel frame 15 between the tube sleeves 151. The wheelbase actuator 20 has an actuator motor 201, wherein the wheelbase actuator 20 is controlled by the actuator motor 201 to extend or retract. When the wheelbase actuator 20 is extended to push the middle of the front wheel frame 15 to move frontward, the ready-made vehicle body 10 is in a longer-wheelbase mode. On the contrary, when the wheelbase actuator 20 is controlled by the actuator motor 201 to retract, the front wheel frame 15 is pulled rearward and the ready-made vehicle body 10 is in a shorter-wheelbase mode.

Alternatively, the modular mobile vehicle may have multiple wheelbase actuators 20. The wheelbase actuators 20 are mounted on one of the fixed plates 13 and are located between the guiding tubes 14, and an end of each wheelbase actuator 20 is connected with the middle of the front wheel frame 15 between the tube sleeves 151 to control the front wheel frame 15 to move.

The seat module 30 is mounted on the ready-made vehicle body 10 and has a lifting trestle 31, a lifting actuator 32, a seat body 33 and a pair of foot cushions 34. The lifting trestle 31 is detachably mounted on the ready-made vehicle body 10 and has a bottom base 311, a top base 312, two pairs of supporting sticks 313 and a connecting stick 315. The bottom base 311 is mounted on the ready-made vehicle body 10 and has two elongated tracks 314 formed through the bottom base 311 and being adjacent to the rear wheels 12. The top base 312 is mounted on an upside of the bottom base 311 and has two elongated tracks 314 formed through the top base 312 and being adjacent to the rear wheels 12.

The two pairs of the supporting sticks 313 are mounted between and support the top base 312 and the bottom base 311. Each pair of the supporting sticks 313 includes a first supporting stick 313' and a second supporting stick 313" pivotably combined with the supporting stick 313' to form an X-shaped structure. The connecting stick 315 is connected between two junctions of the two pairs of the supporting sticks 313. The two first supporting sticks 313' of the two pairs of the supporting sticks 313 are respectively and slidably mounted in the tracks 314 of the bottom base 311. The two second supporting sticks 313" of the two pairs of the supporting sticks 313 are respectively and slidably mounted in the tracks 314 of the top base 312. The lifting actuator 32 is extendably mounted between the bottom base 311 and the connecting stick 315. The seat body 33 is mounted on an upside of the lifting trestle 31 for a user to sit on the seat body 33. The pair of foot cushions 34 is mounted on a front of the lifting trestle 31 for supporting two legs of the user sitting on the seat body 33.

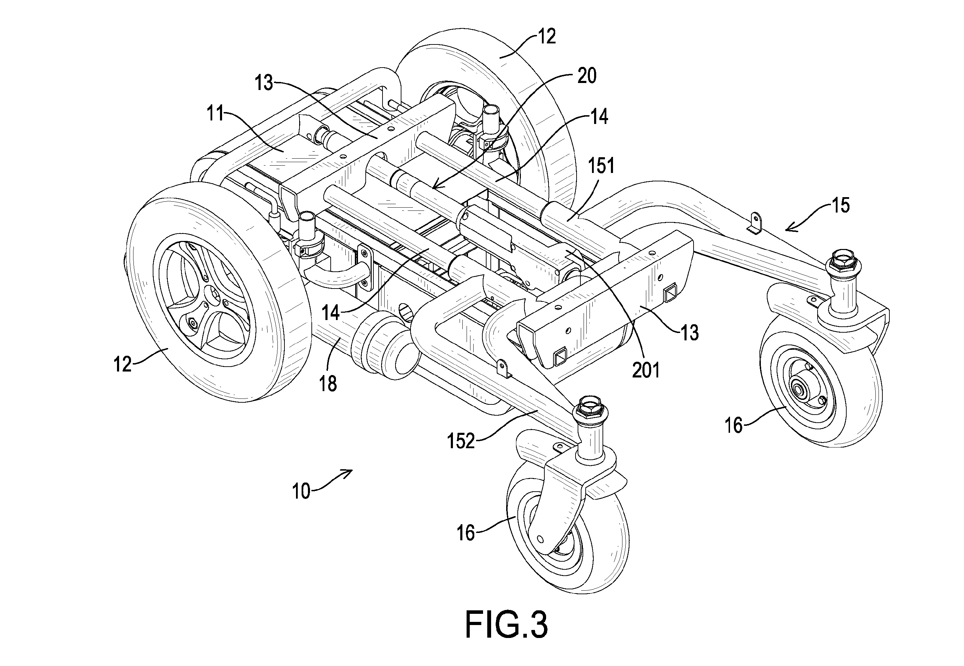

In use, the wheelbase of the modular mobile vehicle can be adjusted by extending or retracting the wheelbase actuator 20 and further to move the front wheel frame 15 frontward or rearward. When the front wheel frame 15 is moved frontward, the modular mobile vehicle has a longer wheelbase, as shown in Fig. 3. When the front wheel frame 15 is moved rearward, the modular mobile vehicle has a shorter wheelbase, as shown in Fig. 1.

Alternatively, the seat module 30 may have two lifting trestles 31. The two lifting trestles 31 are extendably mounted between the bottom base 311 and the connecting stick 315.

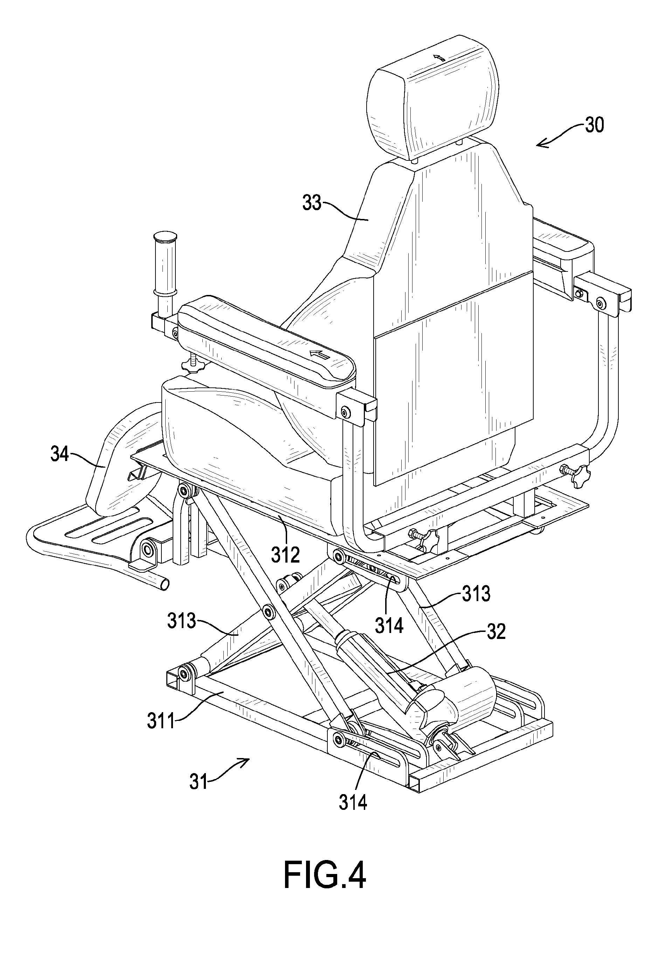

In use, the seat body 33 can be controlled to rise or descend by controlling the lifting actuator 32 to extend or to retract. When the lifting actuator 32 extends to push the connecting stick 315, the two pairs of the supporting sticks 313 are driven to slide frontward in the tracks 314 of the lifting trestle 31, such that the seat body 33 is driven to rise as shown in Fig. 4. When the lifting actuator 32 retracts to pull the connecting stick 315, the two pairs of the supporting sticks 313 are driven to slide backward in the tracks 314 of the lifting trestle 31, such that the seat body 33 is driven to descend as shown in Fig. 1.

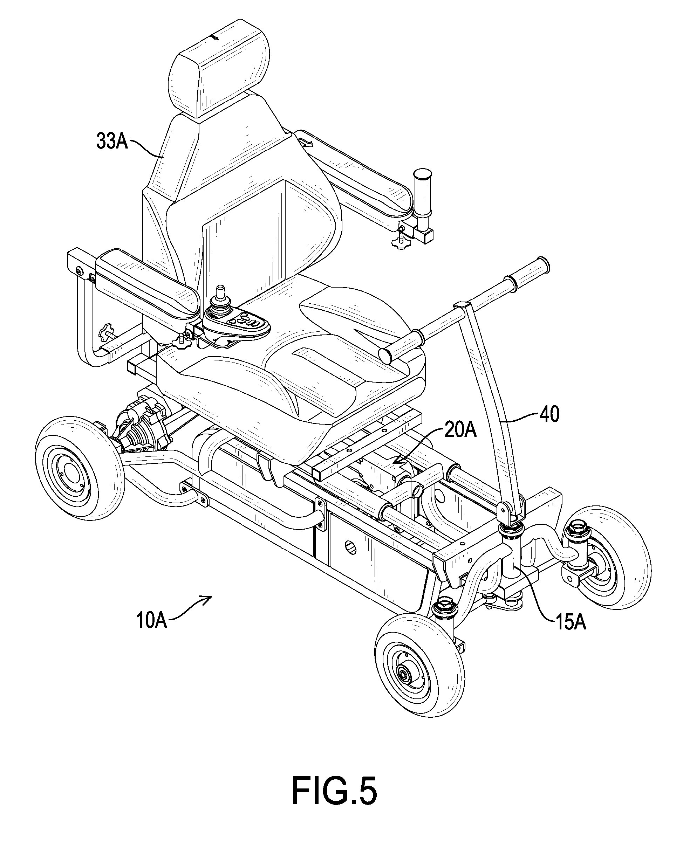

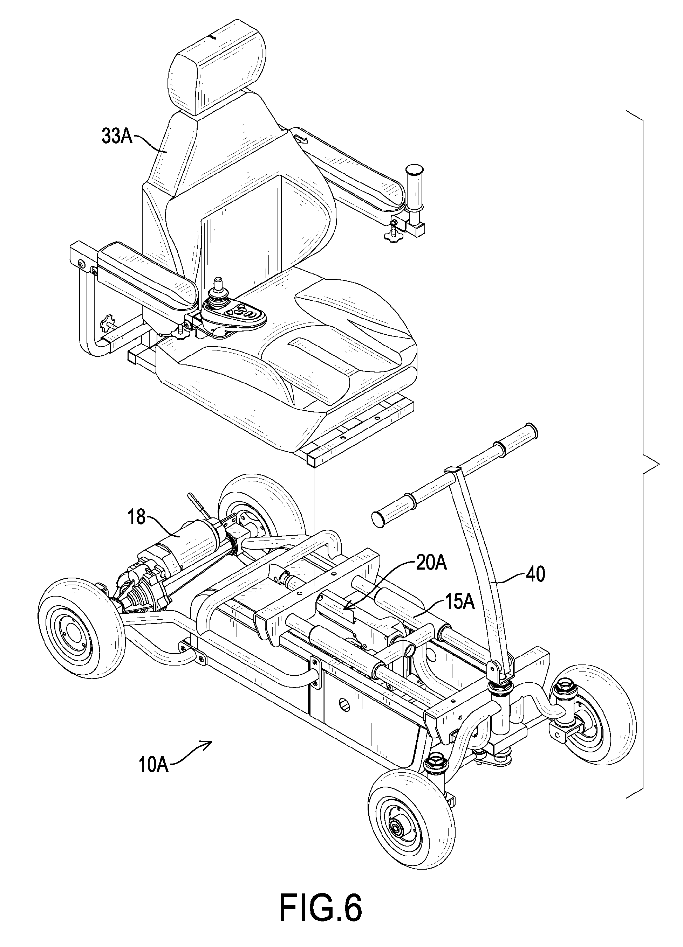

With reference to Figs. 5 to 7, a second preferred embodiment of a modular mobile vehicle with an adjustable wheelbase in accordance with the present invention is a four-wheel scooter and further has a handlebar unit 40 that is connected with the front wheel frame 15A for the user to handle, wherein the lifting trestle and the lifting actuator are omitted. The seat body 33A is detachably mounted on the ready-made vehicle body 10A.

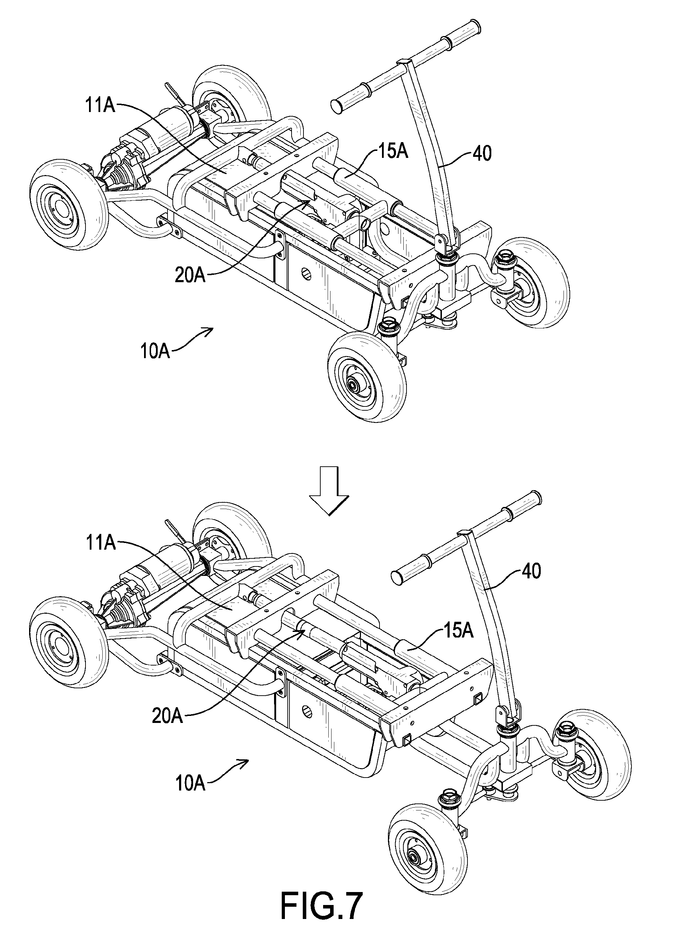

The operation state of the four-wheel scooter is similar to that of the four-wheel wheelchair as shown in Fig. 1. With reference to Fig. 7, when the wheelbase actuator 20A extends to push the front wheel frame 15A frontward, the four-wheel scooter has a larger wheelbase, and vice versa.

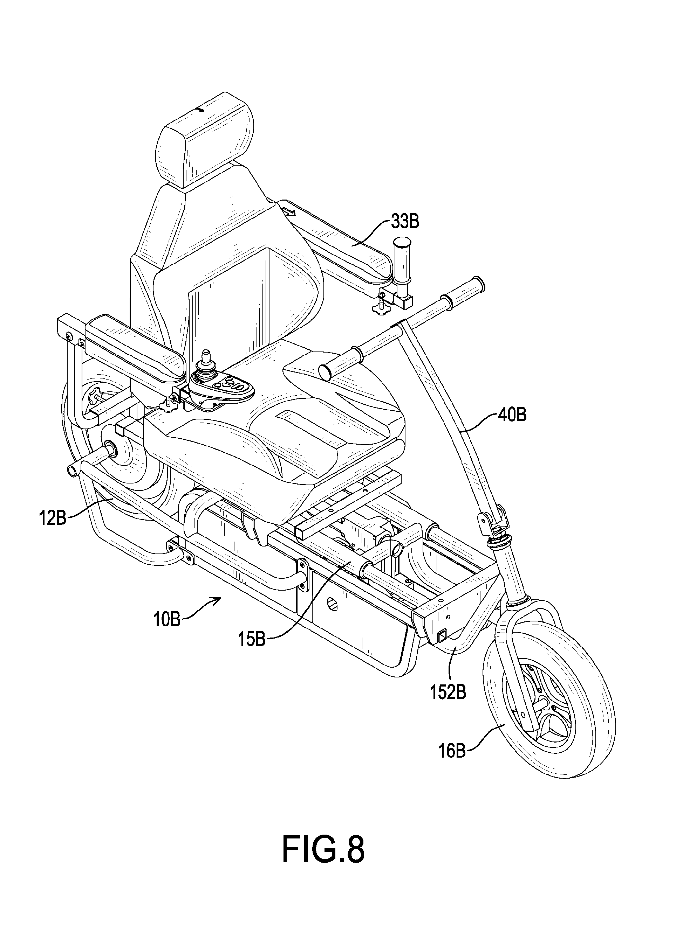

With reference to Figs. 8 to 9, a third preferred embodiment of a modular mobile vehicle with an adjustable wheelbase in accordance with the present invention is a two-wheel scooter, wherein the structure of the two-wheel scooter is similar to that of the four-wheel scooter shown in Fig. 5. The ready-made vehicle body 10B of the two-wheel scooter has a front wheel 16B and a rear wheel 12B. The front wheel 16B is rotatably mounted on the two connecting portions 152B of the front wheel frame 15B. The rear wheel 12B is rotatably mounted on a rear of the frame module 11B. The seat body 33B is detachably mounted on the ready-made vehicle body 10B. The handlebar unit 40B is connected with the front wheel frame 15B.

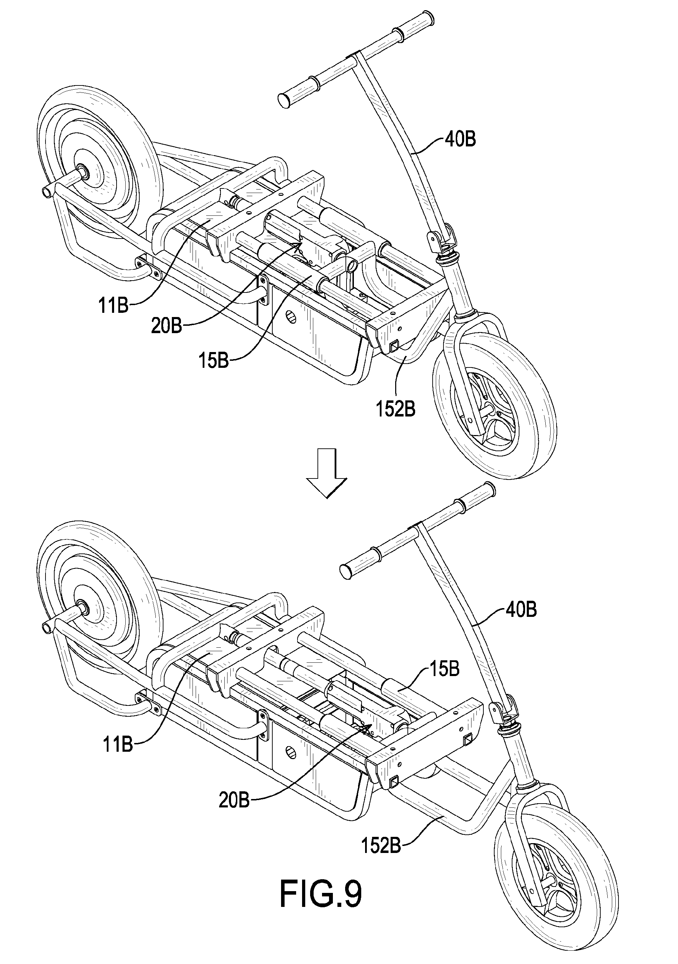

The operation state of the two-wheel scooter is similar to that of the four-wheel scooter. With reference to Fig. 9, when the wheelbase actuator 20B extends to push the front wheel frame 15B frontward, the two-wheel scooter has a larger wheelbase, and vice versa.

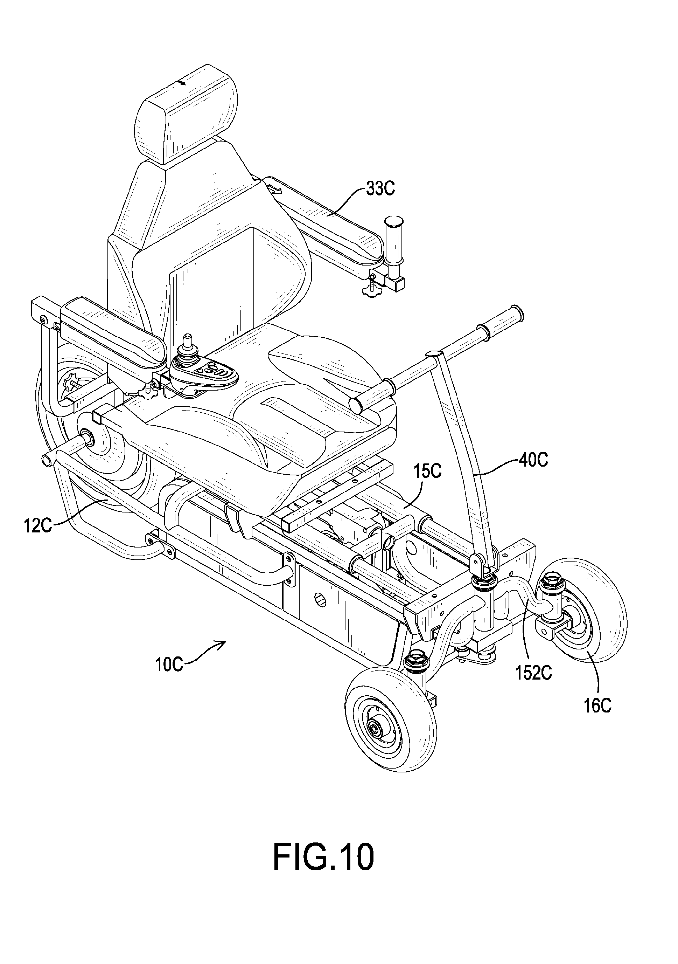

With reference to Figs. 10 to 11, a fourth preferred embodiment of a modular mobile vehicle with an adjustable wheelbase in accordance with the present invention is a three-wheel scooter. The ready-made vehicle body 10C has totally two front wheels 16C and a rear wheel 12C. The front wheels 16C are rotatably mounted on the two connecting portions 152C of the front wheel frame 15C. The rear wheel 12C is rotatably mounted on a rear of the frame module 11C. The seat body 33C is detachably mounted on the ready-made vehicle body 10C. The handlebar unit 40C is connected with the front wheel frame 15C.

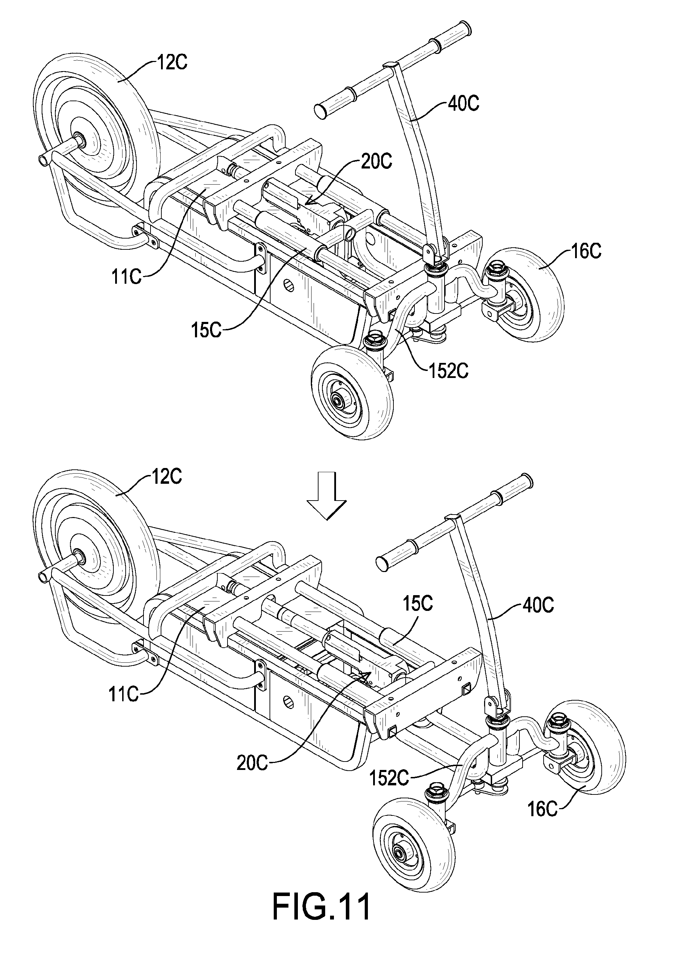

The operation state of the three-wheel scooter is similar to that of the two-wheel scooter. With reference to Fig. 11, when the wheelbase actuator 20C extends to push the front wheel frame 15C frontward, the three-wheel scooter has a larger wheelbase, and vice versa.

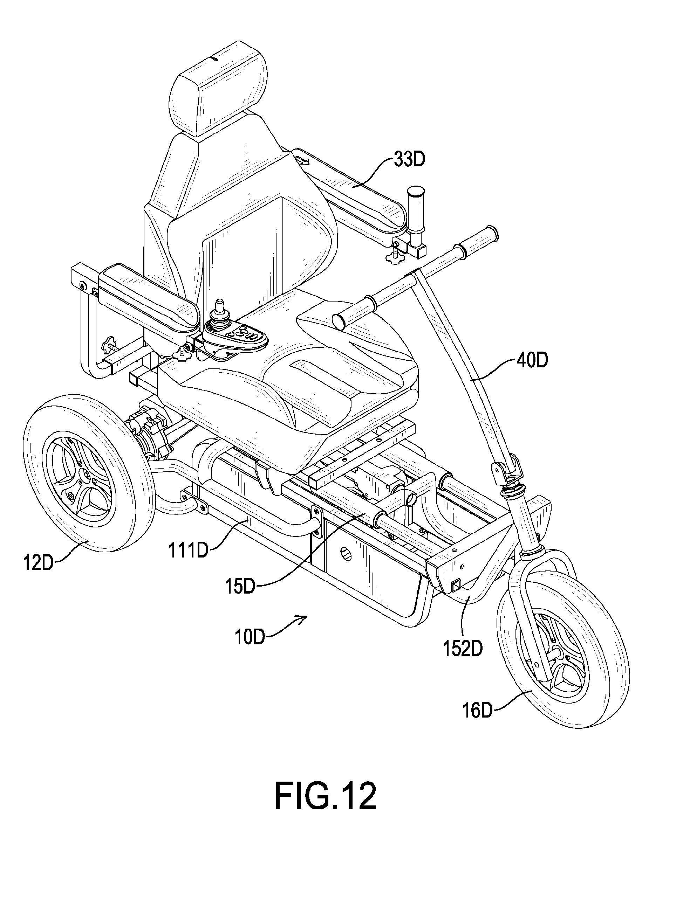

With reference to Figs. 12 to 13, a fifth preferred embodiment of a modular mobile vehicle with an adjustable wheelbase in accordance with the present invention is a three-wheel scooter. The ready-made vehicle body 10D has totally a front wheel 16D and two rear wheels 12D. The front wheel 16D is rotatably mounted on the two connecting portions 152D of the front wheel frame 15D. The rear wheels 12D are rotatably mounted on a rear of the frame module 11D. The seat body 33D is detachably mounted on the ready-made vehicle body 10D. The handlebar unit 40D is connected with the front wheel frame 15D.

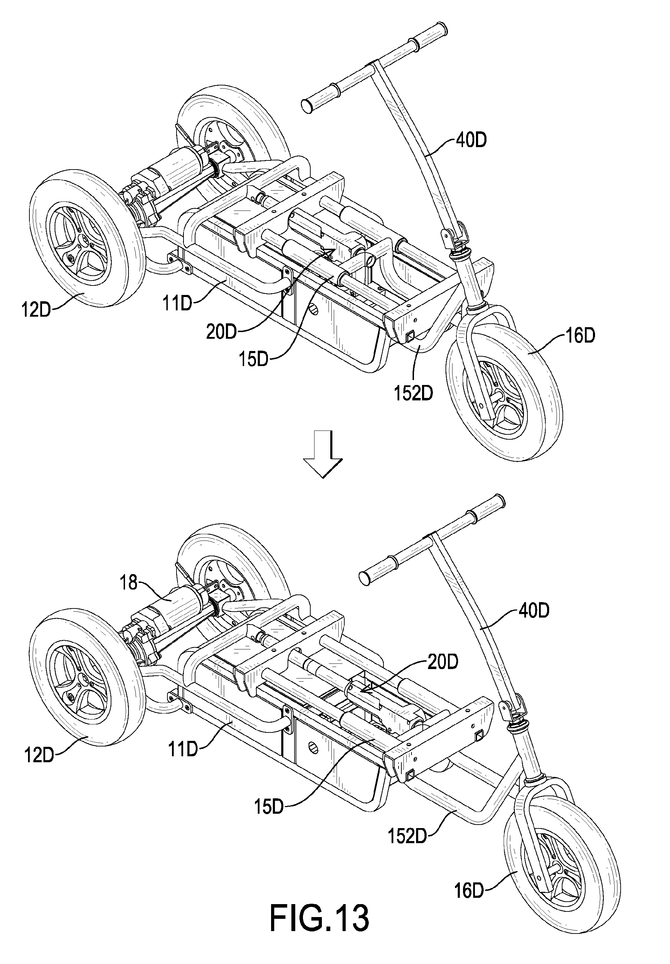

With reference to Fig. 13, when the wheelbase actuator 20D extends to push the front wheel frame 15D frontward, the three-wheel scooter has a larger wheelbase, and vice versa.

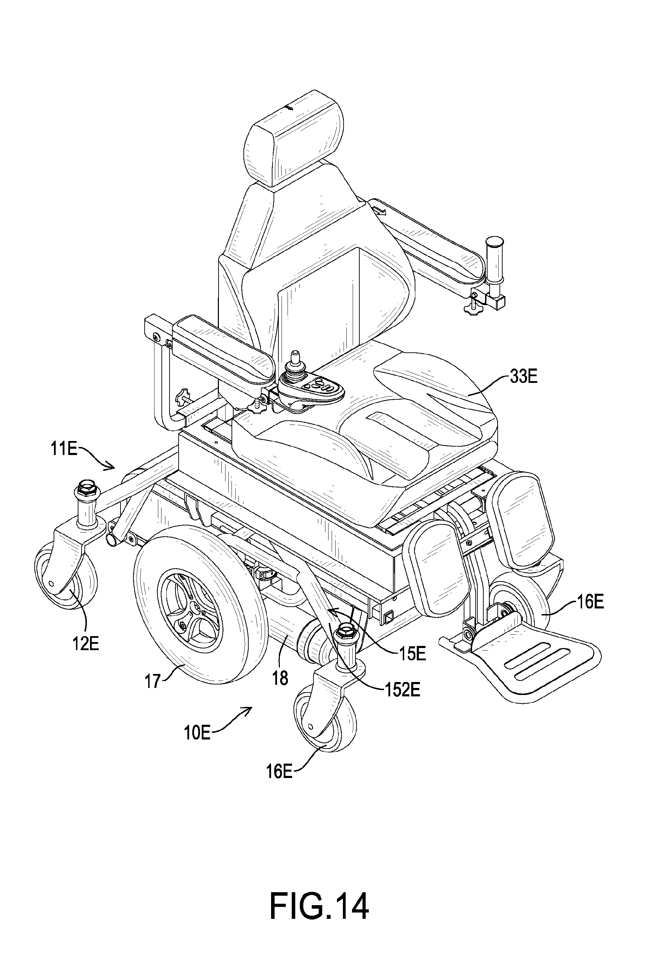

With reference to Figs. 14 to 15, a sixth preferred embodiment of a modular mobile vehicle with an adjustable wheelbase in accordance with the present invention is a six-wheel wheelchair. The ready-made vehicle body 10E has totally two front wheels 16E, two rear wheels 12E and two middle wheels 17. The front wheels 16E are rotatably mounted on the two connecting portions 152E of the front wheel frame 15E. The rear wheels 12E are rotatably mounted on a rear of the frame module 11E. The middle wheels 17 are rotatably mounted on the front wheel frame 15E and are each respectively located between a corresponding one of the front wheels 16E and a corresponding one of the rear wheels 12E. The two motors 18 are respectively linked with the middle wheels 17. The seat body 33E is detachably mounted on the ready-made vehicle body 10E. The handlebar unit 40E is connected with the front wheel frame 15E.

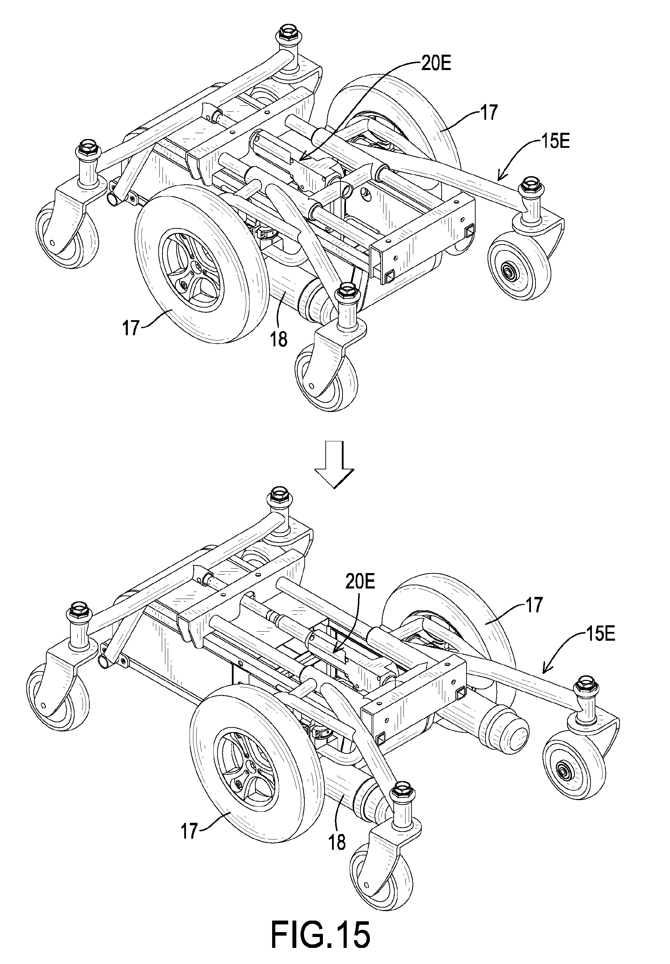

With reference to Fig. 15, when the wheelbase actuator 20E extends to push the front wheel frame 15E frontward, the six-wheel wheelchair has a larger wheelbase. At this time, the six-wheel wheelchair is under a front driving state since the middle wheels 17 move frontward relative to the rear wheels 12E and the motors 18 are linked with the middle wheels 17. On the contrary, when the wheelbase actuator 20E retracts to pull the front wheel frame 15E rearward, the six-wheel wheelchair has a shorter wheelbase. At this time, the six-wheel wheelchair is under a middle driving state.

From the above description, it is noted that the present invention has the following advantages:
1. The wheelbase actuator 20 can control the front wheel frame 15 to move frontward or rearward to adjust the wheelbase of the modular mobile vehicle. Therefore, the modular mobile vehicle can be applied both in an indoor environment and an outdoor environment. The front wheel frame 15 is supported by the horizontally mounted guiding tubes14 and wheelbase actuator 20, such that the supporting strength of the front wheel frame 15 for the front wheels 16 is sufficient.
2. The lifting actuator 32 can control the seat body 33 to rise or descend relative to the ready-made vehicle body 10, such that it is convenient for the user with reduced mobility to interact with other persons. The pair of foot cushions 34 can be applied for supporting the legs of the user to lean on the foot cushions 34. The modules of the modular mobile vehicle, the ready-made vehicle body 10, the wheelbase actuator 20, the seat body 33, the lifting trestle 31, and the lifting actuator 32 can be manufactured modularly, and then the modular mobile vehicle can be assembled according to different demands to form different types, such as four-wheel wheelchair, six-wheel wheelchair, two-wheel scooter, three-wheel scooter, or four-wheel scooter. Therefore, the manufacturing cost can be reduced effectively.
3. When the modular mobile vehicle is a six-wheel wheelchair, the middle wheels 17 can be mounted on the front wheel frame 15, and the motors 18 can be linked with the middle wheels 17. Therefore, when the front wheel frame 15 moves to adjust the wheelbase of the modular mobile vehicle, the motors 18 can be driven to move to change the driving state of the modular mobile vehicle (middle driving state or front driving state).

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A modular mobile vehicle, **characterized in that** the modular mobile vehicle comprises:
a ready-made vehicle body (10) having
a frame module (11) having at least one motor (18);
at least one rear wheel (12) rotatably mounted on the frame module (11);
two guiding tubes (14) horizontally mounted on the frame module (11);
a front wheel frame (15) slidably mounted around the two guiding tubes (14); and
at least one front wheel (16) rotabably mounted on the front wheel frame (15);
at least one wheelbase actuator (20) mounted on the ready-made vehicle body (10), located between the two guiding tubes (14), and extendably connected with the front wheel frame (15); and
a seat module (30) mounted on the ready-made vehicle body (10) and having a seat body (33) detachably mounted on the ready-made vehicle body (10).

2. The modular mobile vehicle as claimed in claim 1, wherein the seat module (30) further has
a lifting trestle (31) detachably mounted between the seat body (33) and the ready-made vehicle body (10), and selectively lifted relative to the ready-made vehicle body (10); and
at least one lifting actuator (20) mounted on the ready-made vehicle body (10) and extendably connected with the lifting trestle (31).

3. The modular mobile vehicle as claimed in claim 2, wherein the lifting trestle (31) further has
a bottom base (311) mounted on the ready-made vehicle body (10) and having two elongated tracks (314), wherein the two tracks (314) of the bottom base (311) are formed through the bottom base (311) and are adjacent to the at least one rear wheel (12);
a top base (312) mounted on the seat body (33) and having two elongated tracks (314), wherein the two tracks (314) of the top base (312) are formed through the top base (312) and are adjacent to the at least one rear wheel (12);
two pairs of supporting sticks (313) mounted between and supporting the top base (312) and the bottom base (311), wherein each pair of the supporting sticks (313) includes a first supporting stick (313') and a second supporting stick (313") pivotably combined with the first supporting stick (313) to form an X shape, wherein the two first supporting sticks (313') of the two pairs of the supporting sticks (313) are respectively and slidably mounted in the tracks (314) of the bottom base (311), and the two second supporting sticks (313") of the two pairs of the supporting sticks (313) are respectively and slidably mounted in the tracks (314) of the top base (312); and
a connecting stick (315) connected between two junctions of the two pairs of the supporting sticks (313), wherein the at least one lifting actuator (32) is extendably mounted between the bottom base (311) and the connecting stick (315).

4. The modular mobile vehicle as claimed in claim 3, wherein the seat module (30) further has a pair of foot cushions (34) mounted on the lifting trestle (31).

5. The modular mobile vehicle as claimed in claims 1 to 4, wherein the ready-made vehicle body (10) has two rear wheels (12) and two front wheels (16), wherein
the two rear wheels (12) are rotatably mounted on the frame module (11) and linked with the at least one motor (18); and
the two front wheels (16) are rotatably mounted on the front wheel frame (15).

6. The modular mobile vehicle as claimed in claims 1 to 4 further having a handlebar unit (40) connected with the front wheel frame (15), wherein the ready-made vehicle body (10) has two rear wheels (12) and two front wheels (16), wherein
the two rear wheels (12) are rotatably mounted on the frame module (11) and linked with the at least one motor (18); and
the two front wheels (16) are rotatably mounted on the front wheel frame (15).

7. The modular mobile vehicle as claimed in claims 1 to 4 further having a handlebar unit (40) sconnected with the front wheel frame (15), wherein the ready-made vehicle body (10) has a rear wheel (12) and a front wheel (16), wherein
the rear wheel (12) is rotatably mounted on the frame module (11); and
the front wheel (16) is rotatably mounted on the front wheel frame (15).

8. The modular mobile vehicle as claimed in claims 1 to 4 further having a handlebar unit (40) connected with the front wheel frame (15), wherein the ready-made vehicle body (10) has a rear wheel (12) and two front wheels (16), wherein
the rear wheel (12) is rotatably mounted on the frame module (11); and the front wheels (16) are rotatably mounted on the front wheel frame (15).

9. The modular mobile vehicle as claimed in claims 1 to 4 further having a handlebar unit (40) connected with the front wheel frame (15), wherein the ready-made vehicle body (10) has two rear wheels (12) and a front wheel (16), wherein
the rear wheels (12) are rotatably mounted on the frame module (11) and linked with the at least one motor (18); and
the front wheel (16) is rotatably mounted on the front wheel frame (15).

10. The modular mobile vehicle as claimed in claims 1 to 4, wherein the ready-made vehicle body (10) has two rear wheels (12), two front wheels (16) and two middle wheels (17), wherein
the two rear wheels (12) are rotatably mounted on the frame module (11) and linked with the at least one motor (18);
the two front wheels (16) are rotatably mounted on the front wheel frame (15); and
the middle wheels (17) are rotatably mounted on the front wheel frame (15), each respectively located between a corresponding one of the rear wheels (12) and a corresponding one of the front wheels (16), and linked with the at least one motor (18).
